# EUROPEAN PATENT SPECIFICATION

(11) **EP 3 645 200 B1**
(45) Date of publication and mention of the grant of the patent: **27.12.2023**
(21) Application number: 18824279.6
(22) Date of filing: 26.06.2018
(51) Int. Cl.: B23D 45/04, B23D 47/12, B23D 47/02, B24B 27/08

(54) **CUT-OFF SAW**
TRENNSÄGE
SCIE À TRONÇONNER

(30) Priority: 26.06.2017 US 201762524770 P
(43) Date of publication of application: 06.05.2020
(73) Proprietor: Milwaukee Electric Tool Corporation, Brookfield, WI 53005 (US)
(72) Inventor: ZIMMERMAN, Jacob, N., Pewaukee, WI 53072 (US); WYLER, Andrew, R., Pewaukee, WI 53072 (US); VARA, Gabriel, M., Sharon, WI 53585 (US)
(74) Representative: Novagraaf Group
(86) International application number: PCT/US2018/039395
(87) International publication number: WO 2019/005725

(56) References cited:
- EP-A1- 3 006 145
- EP-A1- 3 006 145
- US-A- 3 893 240
- US-A- 4 041 789
- US-A1- 2006 175 913
- US-A1- 2007 240 313
- US-A1- 2009 007 440
- US-A1- 2012 251 241
- US-A1- 2015 038 064
- US-A1- 2015 038 064

## Description

### CROSS-REFERENCE TO RELATED APPLICATIONS

This application claims priority to co-pending U.S. Provisional Patent Application No. 62/524,770, filed on June 26, 2017.

### BACKGROUND OF THE INVENTION

The present disclosure relates to cut-off saws, and more particularly to battery powered cut-off saws.

According to its abstract, US 3893240 A describes a portable cutting implement that has a motor housing with a two parts arm whose outer end portion carries a cutting disc and can be turned and held in two different positions and a belt transmission extending through said arm and operatively connecting the motor to the cutting disc.

### SUMMARY OF THE INVENTION

Aspects of the present invention are defined by the appended independent claim 1. Preferred embodiments of the present invention are defined by the appended dependent claims.

Described herein is a power tool that includes a housing and a support arm extending from the housing and defining a longitudinal axis. The support arm includes a first arm portion coupled to the housing and a second arm portion coupled to the first arm portion. The power tool further includes a drive pulley coupled to the first arm portion. The drive pulley defines a first axis. A driven pulley is coupled to the second arm portion and defines a second axis spaced from the first axis. The power tool also includes a synchronous belt connecting the drive pulley and the driven pulley. The second arm portion is movable relative to the first arm portion between a first configuration and a second configuration offset 180 degrees from the first configuration about the longitudinal axis. A distance between the first axis and the second axis is substantially the same in both the first configuration and the second configuration.

Also described herein is a power tool that includes a housing, a motor supported within the housing, the motor having an output shaft operable at maximum speed greater than 10,000 revolutions per minute, and a battery configured to power the motor, the battery having an output voltage greater than 40 volts. A support arm extends from the housing and defines a longitudinal axis. The support arm includes a first arm portion coupled to the housing and a second arm portion coupled to the first arm portion. A drive pulley is coupled to the output shaft, which is rotatably coupled to the first arm portion. The drive pulley defines a first axis. A driven pulley is coupled to the second arm portion and defines a second axis spaced from the first axis. The power tool also includes a synchronous belt connecting the drive pulley and the driven pulley, and a cutting wheel coupled to the driven pulley, the cutting wheel having a diameter greater than 22.9 cm (9 inches). The second arm portion is movable relative to the first arm portion between a first configuration and a second configuration offset 180 degrees from the first configuration about the longitudinal axis, thereby relocating the cutting wheel to another side of the support arm. A distance between the first axis and the second axis is substantially the same in both the first configuration and the second configuration.

Also described herein is a power tool that includes a housing having an upper portion and a lower portion, a motor supported within the lower portion, a battery configured to provide power to the motor, and a battery receptacle disposed on the upper portion of the housing, the battery being removably coupled to the receptacle. The battery receptacle includes a guide rail defining an insertion and removal axis of the battery, a recessed portion adjacent the guide rail, the recessed portion having a drainage surface forming an acute included angle with the insertion and removal axis, and a drainage hole located proximate an end of the drainage surface. The drainage surface is configured to direct fluid that infiltrates an interface between the battery and the battery receptacle toward the drainage hole.

Also described herein is a cut-off saw that includes a housing, a motor supported within the housing, the motor having an output shaft operable at maximum speed greater than 10,000 revolutions per minute, and a battery configured to power the motor. The battery has an output voltage greater than 40 volts. The cut-off saw also includes a drive pulley coupled to the output shaft, a driven pulley connected to the drive pulley by a synchronous belt, and a cutting wheel coupled to the driven pulley. The cutting wheel has a diameter greater than 22.9 cm (9 inches).

Other aspects of the disclosure will become apparent by consideration of the detailed description and accompanying drawings.

### BRIEF DESCRIPTION OF THE DRAWINGS

FIG. 1 is a perspective view of a cut-off saw according to an embodiment of the disclosure.
FIG. 2 is a cross-sectional view of the saw of FIG. 1, taken along line 2-2 in FIG. 1.
FIG. 3 is a perspective view of the saw of FIG. 1, illustrating a drive train of the saw.
FIG. 4 is a perspective view illustrating a battery receptacle of the saw of FIG. 1.
FIG. 5 is a cross-sectional view taken along line 5-5 in FIG. 4.
FIG. 6A is a perspective view illustrating a drainage surface of the battery receptacle of FIG. 4.
FIG. 6B is a cross-sectional view illustrating a water drainage path.
FIG. 7 is a cross-sectional view taken along line 7-7 in FIG. 1.
FIG. 8 is a cross-sectional view taken along line 8-8 in FIG. 1.
FIG. 9 is an exploded view of a support arm of the saw of FIG. 1.
FIG. 10 is a perspective view of the support arm of FIG. 9 in a first configuration.
FIG. 11 is a perspective view of the support arm of FIG. 9 in a second configuration.
FIG. 12 is a perspective view of a portion of the saw of FIG. 1 with the support arm in the first configuration.
FIG. 13 is a perspective view of a portion of the saw of FIG. 1 with the support arm in the second configuration.
FIG. 14 is another perspective view of the portion of the saw of FIG. 13.
FIG. 15 is an exploded view of a portion of the saw of FIG. 1.

Before any embodiments of the disclosure are explained in detail, it is to be understood that the disclosure is not limited in its application to the details of construction and the arrangement of components set forth in the following description or illustrated in the accompanying drawings. The disclosure is capable of supporting other embodiments and of being practiced or of being carried out in various ways according to the invention defined by the claims.

### DETAILED DESCRIPTION

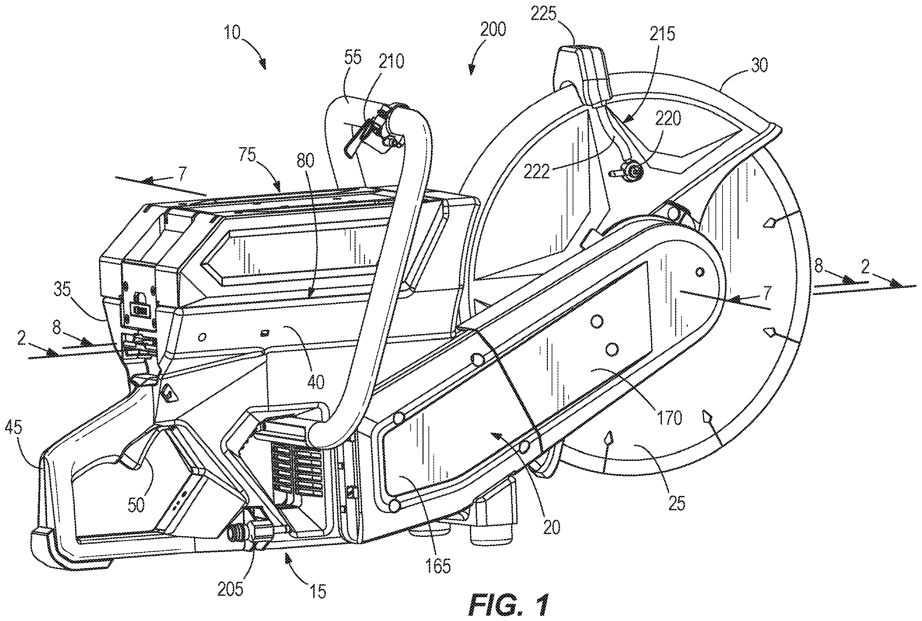

FIG. 1 illustrates a handheld power tool 10, which is a cut-off saw in the illustrated embodiment. The saw 10 includes a housing 15, a support arm 20 coupled to and extending from the housing 15, a cutting wheel 25 carried by the support arm 20, and a guard 30 covering a portion of the circumference of the cutting wheel 25. The cutting wheel 25 can be a blade, an abrasive disk, or any other rotatable element capable of removing material from a workpiece. According to the invention, the cutting wheel 25 has a diameter greater than 22.9 cm (9 inches) and is preferably 35.6 cm (14 inches) in diameter. In other embodiments, the cutting wheel 25 can be between about 25.4 cm (10 inches) and about 40.6 cm (16 inches) in diameter.

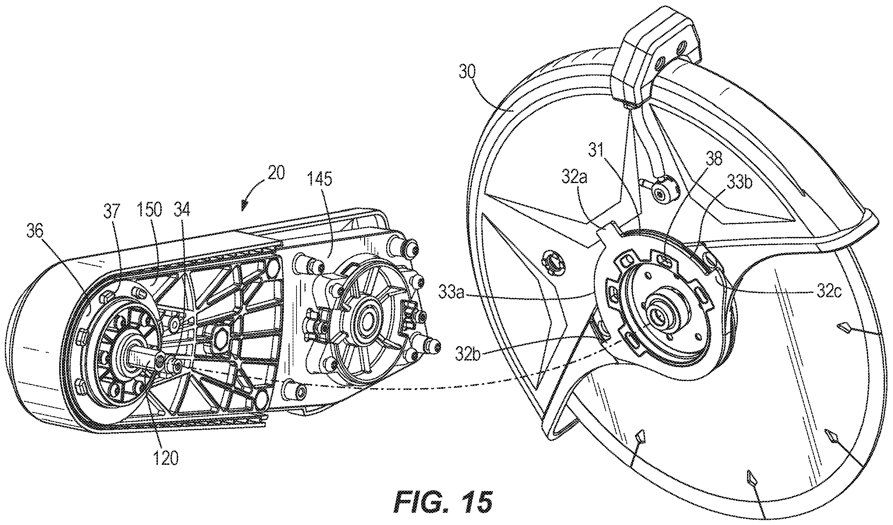

With reference to FIG. 15, the guard 30 is rotatably coupled to the support arm 20 to provide a variety of operating positions that expose different circumferential portions of the cutting wheel 25. This advantageously allows the saw 10 to be used in a variety of cutting positions. In the illustrated embodiment, a stop member 31 is coupled for co-rotation with the guard 30 and includes first, second, and third projections 32a, 32b, 32c that extend in a radially outward direction. A first travel region 33a is defined between the first and second projections 32a, 32b, and a second travel region 33b is defined between the first and third projections 32a, 32c. In the illustrated embodiment, a post 34 (which may be, for example, the head of a cap screw) projects from the support arm 20 into one of the travel regions 33a, 33b, depending on an installation position of the guard 30.

With continued reference to FIG. 15, the post 34 is engageable with the projections 32a, 32b to limit movement of the guard 30 to first and second rotational positions that define the ends of the first travel region 33a. Alternatively, the post 34 is engageable with the projections 32a, 32c to limit movement of the guard 30 to third and fourth rotational positions that define the ends of the second travel region 33b. In some embodiments, a user may remove and reposition the guard 30 to align the post 34 with either the first travel region 33a or the second travel region 33b, to permit movement of the guard 30 between the first and second rotational positions or the third and fourth rotational positions, respectively. In the illustrated embodiment, an elastomeric gasket 36 is disposed between the guard 30 and the support arm 20. The gasket 36 includes axially protruding portions 37 that are received in corresponding recesses 38 in the guard 30 such that the gasket 36 is coupled for co-rotation with the guard 30. The gasket provides a frictional engagement between the guard 30 and the support arm 20 to inhibit inadvertent rotation of the guard 30.

Referring again to FIG. 1, the illustrated housing 15 is a clamshell housing having left and right cooperating halves 35, 40. A first or rear handle 45 extends from a rear portion of the housing 15 in a direction generally opposite the support arm 20. A trigger 50 for operating the saw 10 is located on the rear handle 45. In the illustrated embodiment, the saw 10 also includes a second or forward handle 55 that wraps around an upper portion of the housing 15. The forward handle 55 and the rear handle 45 provide grip areas to facilitate two-handed operation of the saw 10.

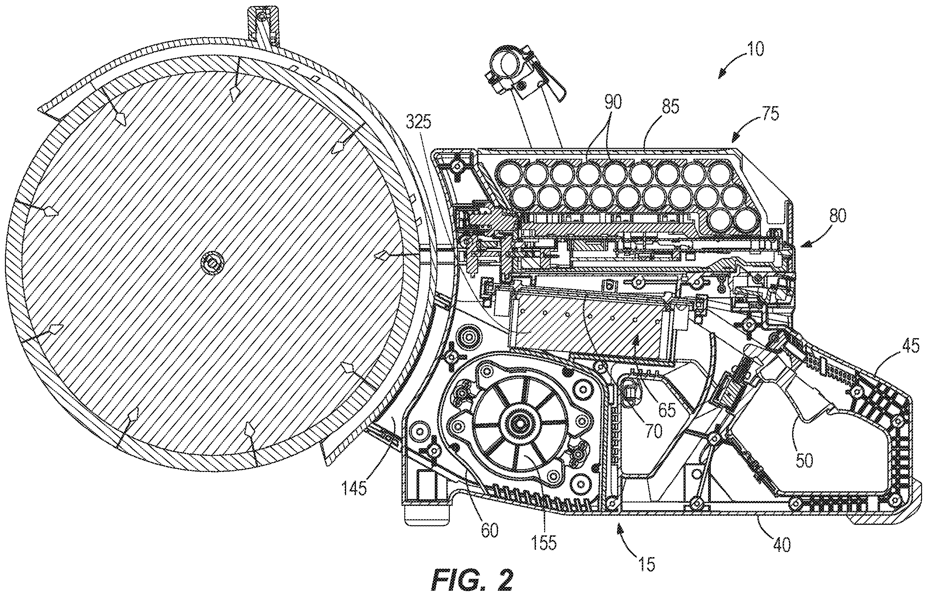

Referring to FIG. 2, the saw 10 further includes a motor housing 60 formed within the housing 15 at a front, lower portion of the housing 15. An electric motor (not shown) is mounted in the motor housing 60. The motor is preferably a brushless direct-current ("BLDC") motor. Operation of the motor is governed by a motor control system 65 including a printed circuit board ("PCB") 70.

With reference to FIGS. 1 and 2, the illustrated saw 10 is a cordless electric saw and includes a battery 75 that provides power to the motor. The battery 75 is removably coupled to a battery receptacle 80, which is located on the upper portion of the housing 15 in the illustrated embodiment (FIG. 1). As such, the forward handle 55 at least partially surrounds the battery receptacle 80 and the battery 75, when the battery 75 is coupled to the receptacle 80. In other embodiments, the saw 10 may be a corded electric saw configured to receive power from a wall outlet or other remote power source. The illustrated battery 75 is a power tool battery pack and includes a battery housing 85 and a plurality of rechargeable battery cells 90 (FIG. 2) disposed within the housing 85. The battery cells 90 are lithium-based battery cells but can alternatively have any other suitable chemistry. In the illustrated embodiment, the battery 75 has a nominal output voltage of about 80V. In other embodiments, the battery 75 can have a different nominal voltage, which according to the invention, is however always greater than 40V.

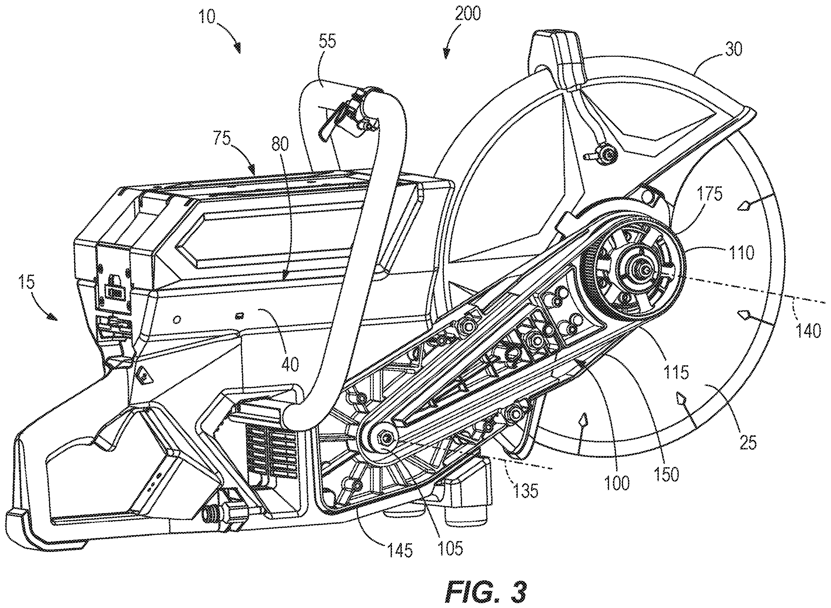

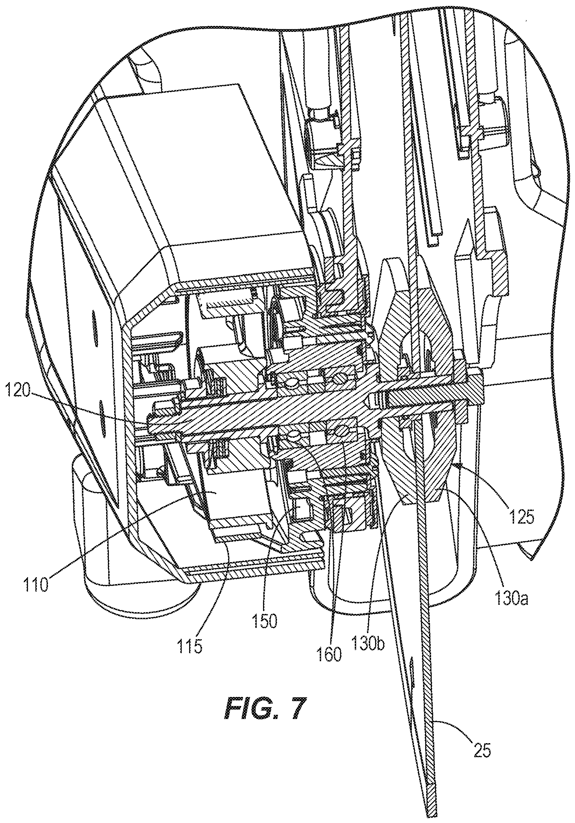

The saw 10 includes a drive assembly 100 for transmitting torque from the motor to the cutting wheel 25 (FIG. 3). The drive assembly 100 includes a drive pulley 105 fixed to an output shaft (not shown) of the motor, a driven pulley 110 connected to the drive pulley 105 by a belt 115, a spindle 120 fixed to the driven pulley 110 (FIG. 7), and a clamp assembly 125 coupled to the spindle 120. In some embodiments, a clutch mechanism may be provided between the output shaft and the drive pulley 105 to selectively interrupt torque transfer between the output shaft and the drive pulley 105. The clamp assembly 125 includes clamping disks 130a, 130b that hold the cutting wheel 25.

With reference to FIGS. 1-3, the drive pulley 105 defines a first rotational axis 135, and the driven pulley 110 defines a second rotational axis 140 spaced from the first rotational axis (FIG. 3). The support arm 20 includes a first arm portion 145 coupled to the housing 15 and a second arm portion 150 coupled to the first arm portion 145. In the illustrated embodiment, the first arm portion 145 includes a mount 155 to which the motor is directly fastened (FIG. 2). The output shaft of the motor extends through the first arm portion 145 to the drive pulley 105 (FIG. 3). The spindle 120 extends through the second arm portion 150 and is supported by two bearings 160. The driven pulley 110 and the clamp assembly 125 are located on opposite sides of the second arm portion 150. In the illustrated embodiment, first and second covers 165, 170 (FIG. 1) are secured to the first and second arm portions 145, 150 to enclose the drive assembly 100 during ordinary operation. The covers 165, 170 are coupled to the respective arm portions 145, 150 by screws, but can be attached via a snap fit or any other suitable manner in other embodiments.

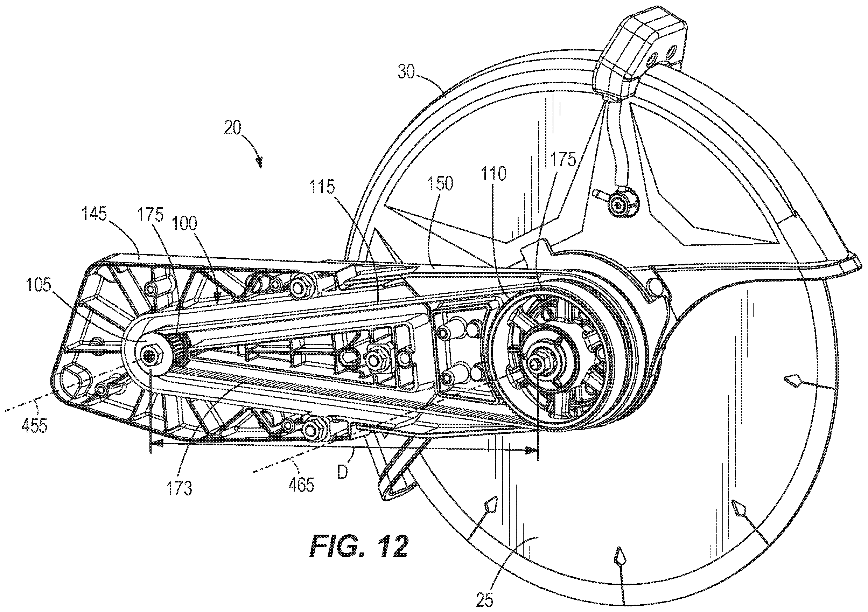

With reference to FIG. 12, the illustrated belt 115 is a synchronous belt having a plurality of teeth 173 extending laterally across a width of the belt 115. The teeth 173 are engageable with corresponding teeth 175 on the driven pulley 110 and the drive pulley 105. The toothed engagement between the synchronous belt 115 and the pulleys 105, 110 prevents the belt 115 from slipping under high loads as may occur with a v-belt. In addition, the relatively flat profile of the synchronous belt 115 allows the drive pulley 105 to be smaller in diameter when compared with a v-belt configuration. As such, a higher reduction can be achieved between the drive pulley 105 and the driven pulley 110. For example, in some embodiments, the drive pulley 105 and the driven pulley 110 may be sized to provide a 4:1 reduction from the motor output shaft to the spindle 120. In other embodiments, the drive pulley 105 and the driven pulley 110 may be sized to provide between a 3:1 and a 5:1 reduction from the motor output shaft to the spindle 120.

This relatively high reduction ratio advantageously eliminates the need for a separate gearbox or gear reduction stage between the motor output shaft and the drive pulley 105, thereby improving mechanical efficiency and reducing the size, cost, and weight of the drive assembly 100. In the illustrated embodiment, the drive assembly 100 has a mechanical efficiency (i.e. a ratio of power at the spindle 120 to power at the output shaft of the motor) between about 95 percent and about 98 percent. In contrast, a drive assembly requiring a gearbox may have a mechanical efficiency of only about 92 percent or less. The relatively high reduction ratio also can allow the motor to spin at a higher rate compared to v-belt and direct drive configurations, which can improve cooling and performance. According to the invention, the motor has a maximum output speed greater than 10,000 RPM. In some embodiments, the motor has a maximum output speed greater than 10,000 RPM and less than about 30,000 RPM. In the illustrated embodiment, the motor has a maximum output speed of about 20,000 RPM. Finally, the synchronous belt 115 advantageously does not require tensioning. Accordingly, the saw 10 need not include means for adjusting the tension of the belt 115, which reduces the weight, complexity, and cost of the drive assembly 100. In addition, the saw's performance will stay relatively consistent over the lifetime of the belt 115. In contrast, v-belts typically stretch after a period of ordinary operation and must be manually or automatically tensioned from time to time to prevent slippage.

The drive assembly 100 of the saw 10 advantageously provides for quieter operation than typical cut-off saws. Table 1 lists sound pressure levels in decibels (dBa) measured during operation of the saw 10. The sound pressure levels were measured when operating the saw 10 with a diamond cutting wheel 25, a composite cutting wheel 25, and with no cutting wheel 25 attached. The sound pressure levels were measured in two locations: at the front of the saw 10, and at a typical operator position (i.e. above and behind the rear handle 45).

**TABLE 1: SOUND PRESSURE LEVEL TESTS**

| | Measurement Location | |
|---|---|---|
| Cutting Wheel Material | Front of Tool | Operator Position |
| Diamond | 88.2 dBa | 86.3 dBa |
| Composite | 75.9 dBa | 79.3 dBa |
| No Cutting Wheel | 75.3 dBa | 77.9 dBa |

As evident from the data in Table 1, the saw 10 produces less than 90 dBa during operation. In some embodiments, the saw 10 produces less than 85 dBa during operation. In some embodiments, the saw 10 produces less than 80 dBa during operation. In contrast, it has been found that other cut-off saws on the market produce more than 95 dBa during operation. Human perception of sound pressure is such that an increase of 10 dBa sounds approximately twice as loud. Accordingly, it is evident that the saw 10 would be perceived by an operator as significantly quieter than other cut-off saws.

The saw 10 also advantageously produces less vibration than typical cut-off saws. Table 2 lists hand-arm vibration (HAV) values for the saw 10. Accelerometers were positioned on the rear handle 45 (Location #1) and on the forward handle 55 (Location #2). The HAV values were determined during a wet plunge cutting operation and during no-load operation using an HVM100 Human Vibration Meter produced by LARSON DAVIS. The accelerometers measured acceleration along all three axes, and the HVM100 calculated the HAV values based on vector sums of the measured accelerations.

**TABLE 2: VIBRATION TESTS**

| | Plunge Wet Cut, Location #1 (m/s²) | Plunge Wet Cut, Location #2 (m/s²) | No Load, Location #1 (m/s²) | No Load, Location #2 (m/s²) |
|---|---|---|---|---|
| Trial 1 | 6.18 | 6.30 | 2.83 | 3.25 |
| Trial 2 | 6.00 | 6.06 | 2.76 | 2.65 |
| Trial 3 | 5.69 | 6.06 | 2.85 | 2.73 |
| Trial 4 | 5.80 | 5.41 | 2.84 | 2.74 |
| Trial 5 | 4.99 | 7.01 | 2.85 | 2.79 |
| Average | 5.73 | 6.17 | 2.83 | 2.83 |

As evident from the data in Table 2, the saw 10 may produce an average no-load HAV between about 2.7 m/s² and about 3.0 m/s² at either or both the front handle 55 and the rear handle 45. For example, the illustrated saw 10 produces an average no-load HAV of 2.83 m/s² at both the front handle 55 and the rear handle 45. In other embodiments, the average no-load HAV at the front handle 55 or the rear handle 45 may differ. In some embodiments, the saw 10 may produce an average plunge cut HAV between about 5 m/s² and about 7 m/s², or between about 5 m/s² and about 6.2 m/s² in other embodiments, at either or both the front handle 55 and the rear handle 45. For example, the illustrated saw 10 produces an average plunge cut HAV less than about 6.2 m/s² at the front handle 55 and less than about 5.8 m/s² at the rear handle 45.

With reference to FIG. 1, the illustrated saw 10 further includes a fluid distribution system 200. The fluid distribution system 200 includes a connector 205 coupled to the lower portion of the housing 15, a control valve 210 coupled to the forward handle 55, and a distributor 215 coupled to the guard 30. A supply line (not shown) can be attached to the connector 205 to provide fluid such as water to the fluid distribution system 200 from an external source (not shown). A first line (not shown) extends from the connector 205 to the control valve 210, and a second line (not shown) extends from the control valve 210 to the distributor 215. In the illustrated embodiment, the distributor 215 includes a pair of spray nozzles 220 disposed on opposite sides of the guard 30 connected by a supply line 222. The spray nozzles 220 are operable to discharge fluid onto each side of the cutting wheel 25 for cooling, lubrication, and dust abatement. In the illustrated embodiment, an auxiliary handle 225 is attached to the guard 30 through which a portion of the supply line 222 extends that can be grasped by a user to facilitate adjusting an angular position of the guard 30. However, the handle 225 may alternatively be located elsewhere on the guard 30 remote from the supply line 222.

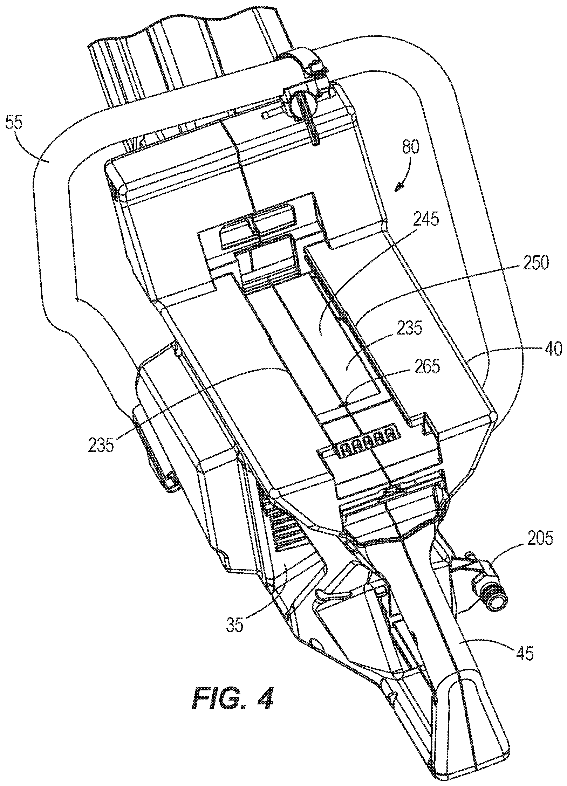

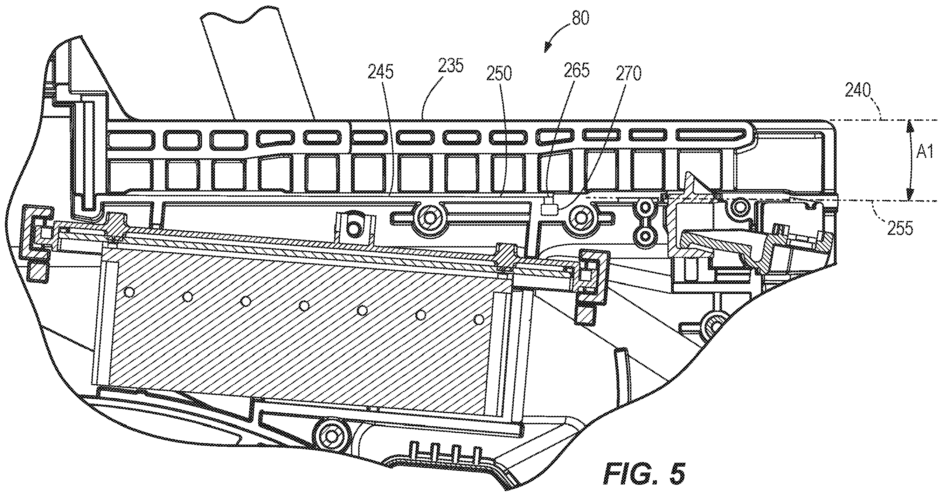

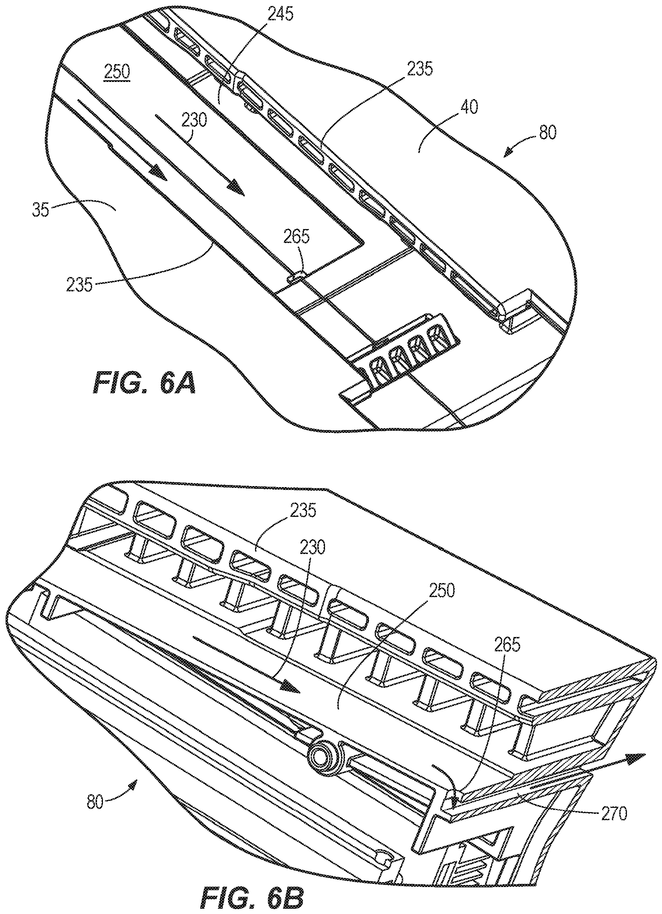

Referring to FIGS. 4-6B, the battery receptacle 80 includes a drainage path 230 (FIGS. 6A and 6B) to direct fluid (e.g., from the fluid distribution system 200) from the interface between the battery housing 85 and the battery receptacle 80. The illustrated battery receptacle 80 includes a pair of guide rails 235 that define an insertion and removal axis 240 of the battery 75 (FIG. 5). The battery receptacle 80 further includes a recessed portion 245 between the guide rails 235. When the battery 75 is positioned in the battery receptacle 80, a lower-most surface of the battery 75 is positioned adjacent the recessed portion 245 of the receptacle 80. The recessed portion 245 of the receptacle 80 has an angled drainage surface 250 that defines an axis 255, which forms an acute included angle A1 with the insertion and removal axis 240. In some embodiments, the angle A1 is between about 0.5 degrees and about 5 degrees. The drainage surface 250 leads to a drainage hole 265 located at an intersection between the left and right housing halves 35, 40 (FIGS. 4 and 6A). The drainage hole 265 communicates with a closed passage 270 that extends laterally through the housing 15, to the exterior of the housing 15.

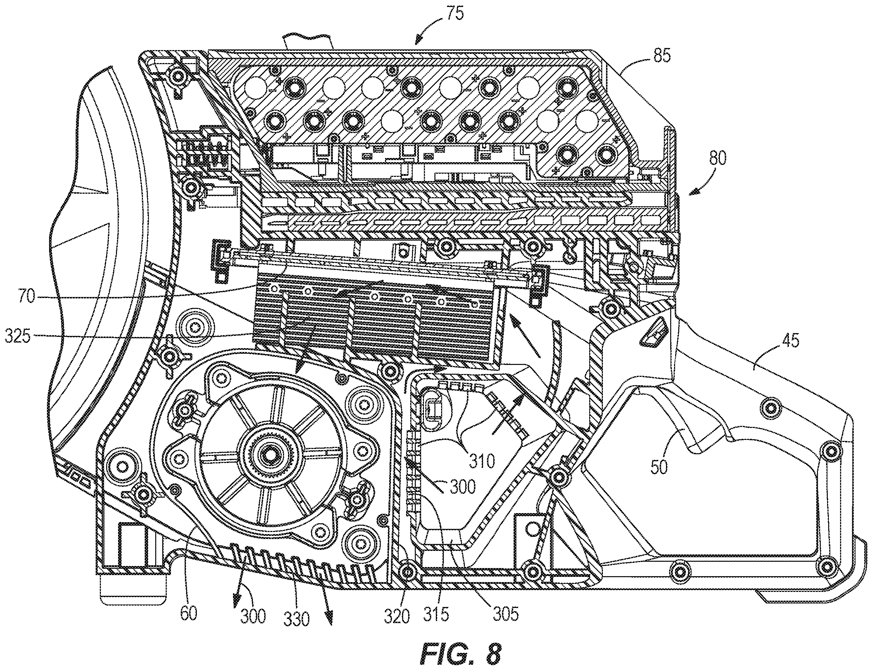

With reference to FIG. 8, the saw 10 further includes a closed cooling path 300 that extends through the housing 15. The illustrated housing 15 includes an aperture 305 that extends laterally through the housing 15, at a position between the rear handle 45 and the motor housing 60. Slotted air intake openings 310 line the aperture 305 and communicate with the interior of the housing 15. In the illustrated embodiment, the aperture 305 has a generally pentagonal or five-sided cross-section, and the air intake openings 310 are positioned on three of the five sides of the aperture 305. The position of the air intake openings 310 in the aperture 305 helps to shield the openings 310 from fluid, dust, and debris present during operation of the saw 10. In other embodiments, the air intake openings 310 may be arranged and positioned differently. Additionally, the saw 10 may not include the aperture 305, and may draw intake air from other locations, such as from proximate the rear handle 45.

With continued reference to FIG. 8, the air intake openings 310 communicate with an air space 315 that is separated from the interior of the motor housing 60 by a wall 320. Air drawn through the air intake openings 310 is routed along the cooling path 300 by the wall 320 and various other walls and baffles, which direct the air past a finned heat sink 325 to cool the PCB 70. After passing over the heat sink 325, the air can enter the motor housing 60, cooling the motor before being discharged through slotted exhaust openings 330 located on the bottom portion of the housing 15. A fan (not shown) is provided with the motor to induce the airflow along the cooling path 300 during operation of the saw 10.

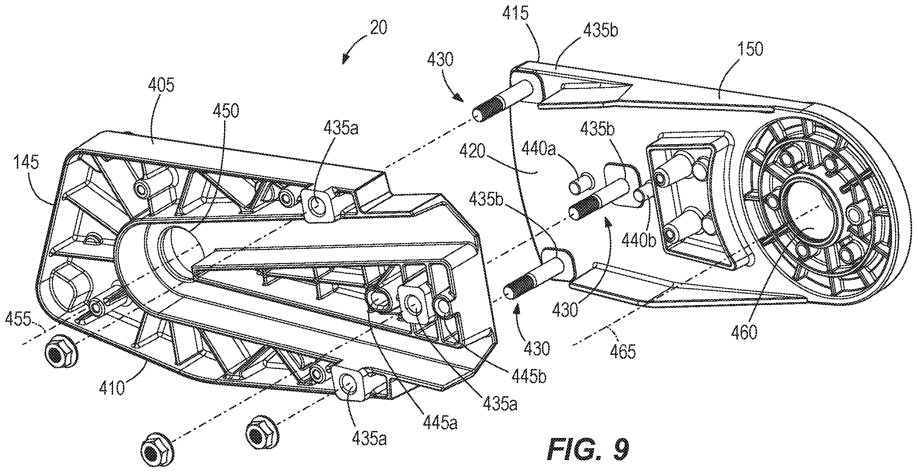

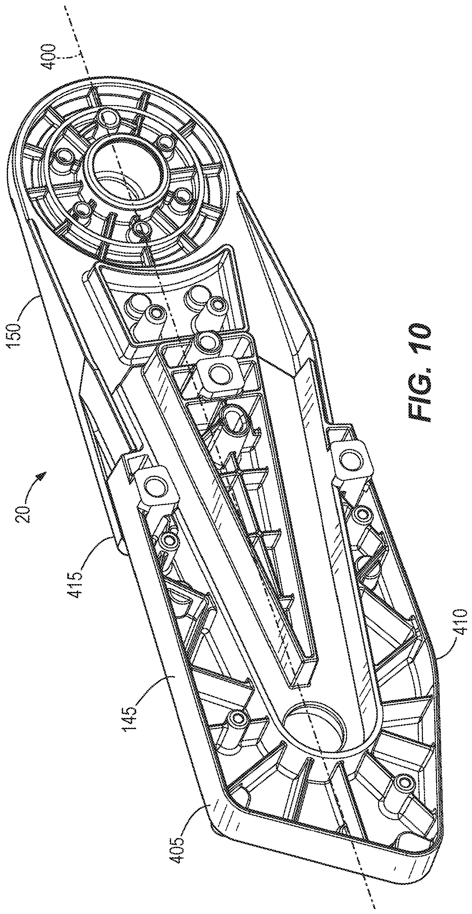

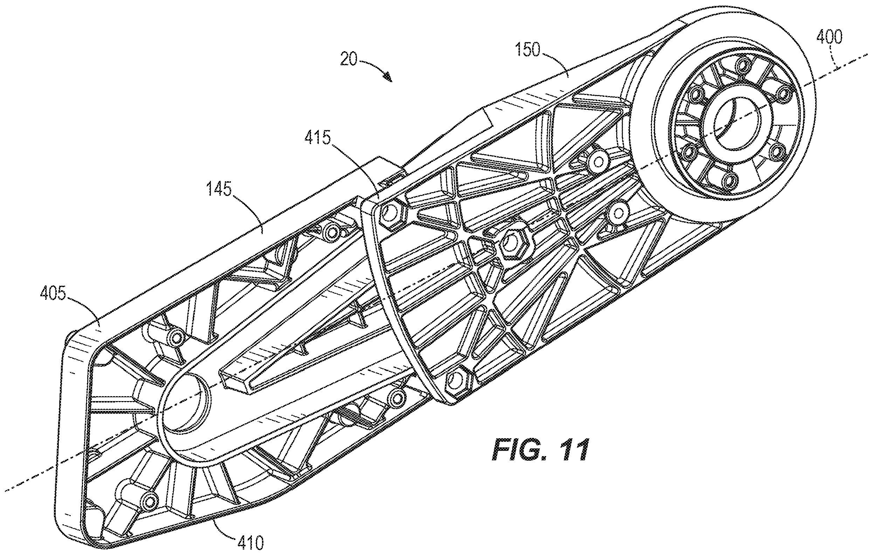

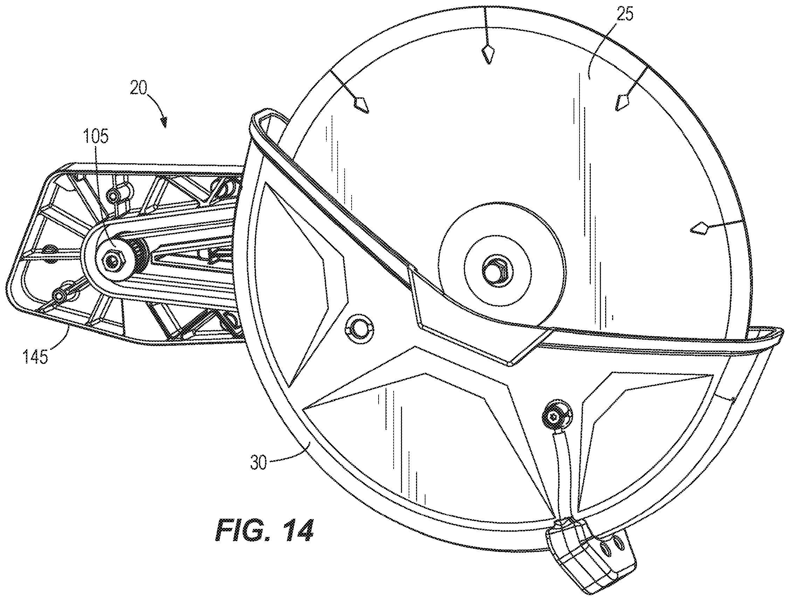

Referring to FIGS. 3 and 9-14, the support arm 20 of the saw 10 is adjustable between a first or inboard configuration (FIGS. 3, 10, and 12) in which the cutting wheel 25 is generally aligned with a longitudinal mid-plane of the saw 10 and a second or outboard configuration (FIGS. 11, 13, and 14) in which the cutting wheel 25 is offset from the longitudinal mid-plane of the saw 10. In the illustrated embodiment, the support arm 20 is adjustable between the first and second configurations by rotating the second arm portion 150 by 180 degrees about a longitudinal axis 400 of the support arm 20 (FIGS. 10 and 11). The first arm portion 145 includes first and second opposite, lateral sides 405, 410. The second arm portion includes a flange 415 having an inner side 420 (FIG. 9). In the first configuration, the inner side 420 of the flange abuts the first lateral side 405 of the first arm portion 145 (FIG. 10), and in the second configuration, the inner side 420 of the flange 415 abuts the second lateral side 410 of the first arm portion 145 (FIG. 11). In the illustrated embodiment, the second arm portion 150 is removably secured to the first arm portion 145 by three fastener assemblies 430 (i.e. nut and bolt assemblies) that extend through corresponding bores 435a, 435b in the first and second arm portions 145, 150 (FIG. 9). To facilitate proper alignment of the second arm portion 150 relative to the first arm portion 145, the second arm portion 150 includes first and second locator pins 440a, 440b that are received within corresponding first and second locator openings 445a, 445b in the first arm portion 145. In the illustrated embodiment, the first locator opening 445a is oval shaped and elongated along the longitudinal axis 400 to allow for tolerance variations.

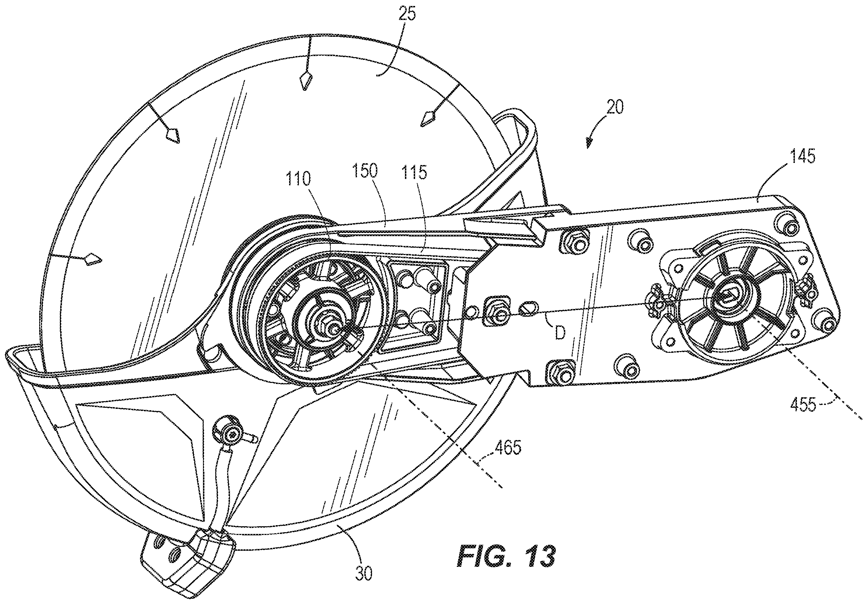

The first arm portion 145 includes a drive opening 450 that defines a first axis 455 coaxial with the rotational axis 135 of the drive pulley 105, and the second arm portion 150 includes a spindle opening 460 that defines a second axis 465 coaxial with the rotational axis 140 of the driven pulley 110 (FIG. 9). A distance D between the first and second axes 455, 465 is substantially the same, regardless of whether the support arm 20 is in the first configuration (FIG. 12) or the second configuration (FIG. 13). Thus, the belt 115 extends the same span and a user need not adjust the tension of the belt 115 when changing the support arm 20 between the first and second configurations.

A power tool according to the invention is defined by the following claims.

## Claims

1. A power tool (10) comprising:
a housing (15);
a motor supported within the housing, the motor having an output shaft operable at maximum speed greater than 10,000 revolutions per minute;
a battery (75) configured to power the motor, the battery having an output voltage greater than 40 volts;
a support arm (20) extending from the housing and defining a longitudinal axis (400), the support arm including a first arm portion (145) coupled to the housing and a second arm portion (150) coupled to the first arm portion;
a drive pulley (105) coupled to the output shaft, which is rotatably coupled to the first arm portion, the drive pulley defining a first axis (135);
a driven pulley (110) coupled to the second arm portion, the driven pulley defining a second axis (140) spaced from the first axis;
a synchronous belt (115) connecting the drive pulley and the driven pulley; and
a cutting wheel (25) coupled to the driven pulley, the cutting wheel having a diameter greater than 22.9 cm (9 inches),
wherein the second arm portion is movable relative to the first arm portion between a first configuration and a second configuration offset 180 degrees from the first configuration about the longitudinal axis, thereby relocating the cutting wheel to another side of the support arm, and
wherein a distance between the first axis and the second axis is substantially the same in both the first configuration and the second configuration.

2. The power tool (10) of claim 1, wherein the first configuration defines an inboard configuration in which the cutting wheel (25) is generally aligned with a longitudinal mid-plane of the power tool, and wherein the second configuration defines an outboard configuration in which the cutting wheel is offset from the longitudinal mid-plane.

3. The power tool (10) of claim 2, wherein the first arm portion (145) includes a first side (405) and a second side (410) opposite the first side, wherein the second arm portion (150) includes a flange (415) having an inner side (420), wherein the inner side abuts the first side of the first arm portion in the first configuration, and wherein the inner side abuts the second side of the first arm portion in the second configuration.

4. The power tool (10) of claim 3, wherein the first arm portion (145) includes a plurality of locator pins receivable within a corresponding plurality of locator openings in the second arm portion (150).

5. The power tool (10) of claim 4, wherein the plurality of locator openings include a first locator opening that is elongated in a direction parallel to the longitudinal axis.

6. The power tool (10) of claim 1, wherein the drive pulley (105) and the driven pulley (110) are configured to provide a speed reduction ratio from the drive pulley to the driven pulley between 3:1 and 5:1.

7. The power tool (10) of claim 1, wherein operation of the power tool produces a sound pressure less than 85 decibels.

8. The power tool (10) of any preceding claim, further comprising a handle (45, 55) configured to be grasped by an operator during operation of the power tool, wherein the power tool is configured to produce a hand-arm vibration at the handle less than 3.0 m/s² during no-load operation.

9. The power tool (10) of any of claims 1 to 7, further comprising a handle (45, 55) configured to be grasped by an operator during operation of the power tool, wherein the power tool is configured to produce a hand-arm vibration at the handle less than 3.0 m/s² during operation without a load on the cutting wheel, and wherein the power tool is configured to produce an average hand-arm vibration at the handle between about 5 m/s² and about 7 m/s² during a plunge-cutting operation.

10. The power tool (10) of claim 1, further comprising a battery receptacle (80) disposed on the upper portion of the housing (15), the battery (75) being removably coupled to the receptacle, the battery receptacle including
a guide rail (235) defining an insertion and removal axis of the battery,
a recessed portion (245) adjacent the guide rail, the recessed portion having a drainage surface (250) forming an acute included angle with the insertion and removal axis, and
a drainage hole (265) located proximate an end of the drainage surface,
wherein the drainage surface is configured to direct fluid that infiltrates an interface between the battery and the battery receptacle toward the drainage hole.

11. The power tool (10) of any one of claims 1 to 7 or 10, further comprising a fluid distribution system (200) including a spray nozzle (220) configured to discharge fluid on to the cutting wheel (25).

12. The power tool (10) of claim 11, wherein the fluid distribution system (200) includes a connector (205) coupled to a lower portion of the housing (15), the connector configured for attachment to a fluid supply line for supplying fluid to the fluid distribution system.

13. The power tool (10) of claim 12, further comprising a handle (225) coupled to the upper portion of the housing (15), wherein the fluid distribution system includes a control valve (210) coupled to the handle.

14. The power tool (10) of claim 11, further comprising a guard (30) configured to at least partially surround the cutting wheel (25),
and optionally:
(a) wherein the spray nozzle (220) is a first spray nozzle, wherein the fluid distribution system further includes a second spray nozzle, and wherein the first spray nozzle and the second spray nozzle are positioned on opposite sides of the guard, or
(b) wherein the guard is adjustable between a plurality of angular positions relative to the cutting wheel, wherein the guard includes an auxiliary handle (225) configured to facilitate adjustment of the guard, wherein the spray nozzle is coupled to a supply line configured to supply fluid to the spray nozzle, and wherein the supply line extends through the auxiliary handle.

15. The power tool of any one of claims 1 to 7 or 10, further comprising:
a rear handle (45) extending from the housing (15);
an aperture (305) extending laterally through the housing between the rear handle and the motor;
a plurality of air intake openings (310) disposed about a periphery of the aperture, the air intake openings in communication with an interior of the housing;
a wall (320) separating the motor from the air intake openings such that an air space is defined between the air intake openings and the wall;
a printed circuit board (70) configured to control operation of the motor, wherein the wall is configured to direct a cooling airflow that enters the air intake openings toward the printed circuit board; and
a plurality of air exhaust openings (330) formed in the lower housing portion, wherein the cooling airflow is dischargeable through the air exhaust openings,
and wherein the cooling airflow is configured to flow past the motor to cool the motor before being discharged through the air exhaust openings.

## Patentansprüche

1. Elektrowerkzeug (10), umfassend:
ein Gehäuse (15);
einen Motor, der innerhalb des Gehäuses gelagert ist, wobei der Motor eine Ausgangswelle aufweist, die bei maximaler Drehzahl über 10.000 Umdrehungen pro Minute betriebsfähig ist;
einen Akku (75), der konfiguriert ist, um den Motor zu speisen, wobei der Akku eine Ausgangsspannung aufweist, die über 40 Volt ist;
einen Tragarm (20), der sich von dem Gehäuse erstreckt und eine Längsachse (400) definiert, wobei der Tragarm einen ersten Armabschnitt (145), der mit dem Gehäuse gekoppelt ist, und einen zweiten Armabschnitt (150), der mit dem ersten Armabschnitt gekoppelt ist, einschließt;
eine Antriebsscheibe (105), die mit der Ausgangswelle gekoppelt ist, die mit dem ersten Armabschnitt drehbar gekoppelt ist, wobei die Antriebsscheibe eine erste Achse (135) definiert;
eine Abtriebsscheibe (110), die mit dem zweiten Armabschnitt gekoppelt ist, wobei die Abtriebsscheibe eine zweite Achse (140) definiert, die von der ersten Achse beabstandet ist;
ein Synchronriemen (115), der die Antriebsscheibe und die Abtriebsscheibe verbindet; und
ein Schneidrädchen (25), das mit der Abtriebsscheibe gekoppelt ist, wobei das Schneidrädchen einen Durchmesser von über 22,9 cm (9 Zoll) aufweist,
wobei der zweite Armabschnitt relativ zu dem ersten Armabschnitt zwischen einer ersten Konfiguration und einer zweiten Konfiguration, die um 180 Grad von der ersten Konfiguration versetzt ist um die Längsachse bewegbar ist, wobei dadurch das Schneidrädchen auf eine andere Seite des Tragarms verlagert wird, und
wobei ein Abstand zwischen der ersten Achse und der zweiten Achse sowohl in der ersten Konfiguration als auch in der zweiten Konfiguration im Wesentlichen gleich ist.

2. Elektrowerkzeug (10) nach Anspruch 1, wobei die erste Konfiguration eine innenliegende Konfiguration definiert, wobei das Schneidrädchen (25) im Allgemeinen an einer Längsmittelebene des Elektrowerkzeugs ausgerichtet ist, und wobei die zweite Konfiguration eine außenliegende Konfiguration definiert, wobei das Schneidrädchen von der Längsmittelebene versetzt ist.

3. Elektrowerkzeug (10) nach Anspruch 2, wobei der erste Armabschnitt (145) eine erste Seite (405) und eine zweite Seite (410) gegenüber der ersten Seite einschließt, wobei der zweite Armabschnitt (150) einen Flansch (415) einschließt, der eine Innenseite (420) aufweist, wobei die Innenseite an der ersten Seite des ersten Armabschnitts in der ersten Konfiguration anstößt, und wobei die Innenseite an der zweiten Seite des ersten Armabschnitts in der zweiten Konfiguration anstößt.

4. Elektrowerkzeug (10) nach Anspruch 3, wobei der erste Armabschnitt (145) eine Vielzahl von Aufnahmestiften einschließt, die innerhalb einer entsprechenden Vielzahl von Aufnahmeöffnungen in dem zweiten Armabschnitt (150) aufnehmbar sind.

5. Elektrowerkzeug (10) nach Anspruch 4, wobei die Vielzahl von Aufnahmeöffnungen eine erste Aufnahmeöffnung einschließen, die in eine Richtung parallel zu der Längsachse verlängert ist.

6. Elektrowerkzeug (10) nach Anspruch 1, wobei die Antriebsscheibe (105) und Abtriebsscheibe (110) konfiguriert sind, um ein Übersetzungsverhältnis ins Langsame von der Antriebsscheibe zu der Abtriebsscheibe zwischen 3 : 1 und 5 : 1 bereitzustellen.

7. Elektrowerkzeug (10) nach Anspruch 1, wobei ein Betrieb des Elektrowerkzeugs einen Schalldruck von weniger als 85 Dezibel erzeugt.

8. Elektrowerkzeug (10) nach einem der vorstehenden Ansprüche, ferner umfassend einen Griff (45, 55), der konfiguriert ist, um durch einen Bediener während des Betriebs des Elektrowerkzeugs gegriffen zu werden, wobei das Elektrowerkzeug konfiguriert ist, um eine Handarmvibration an dem Griff von weniger als 3,0 m/s² während eines Leerlaufs zu erzeugen.

9. Elektrowerkzeug (10) nach einem der Ansprüche 1 bis 7, ferner umfassend einen Griff (45, 55), der konfiguriert ist, um durch einem Bediener während des Betriebs des Elektrowerkzeugs gegriffen zu werden, wobei das Elektrowerkzeug konfiguriert ist, um eine Handarmvibration an dem Griff von weniger als 3,0 m/s² während des Betriebs ohne eine Last an dem Schneidrädchen zu erzeugen, und wobei das Elektrowerkzeug konfiguriert ist, um eine durchschnittliche Handarmvibration an dem Griff zwischen etwa 5 m/s² und etwa 7 m/s² während eines Tauchvorgangs zu erzeugen.

10. Elektrowerkzeug (10) nach Anspruch 1, ferner umfassend ein Akkufach (80), das auf dem oberen Abschnitt des Gehäuses (15) angeordnet ist, wobei der Akku (75) mit dem Fach entfernbar gekoppelt ist, wobei das Akkufach einschließt
eine Führungsschiene (235), die eine Einsatz- und Entfernungsachse des Akkus definiert,
einen ausgesparten Abschnitt (245) angrenzend an die Führungsschiene, wobei der ausgesparte Abschnitt eine Ablaufoberfläche (250) aufweist, die einen spitzen eingeschlossenen Winkel mit der Einsatz- und Entfernungsachse ausbildet, und
eine Ablaufbohrung (265), die sich nahe einem Ende der Ablaufoberfläche befindet,
wobei die Ablaufoberfläche konfiguriert ist, um Fluid, das in eine Schnittstelle zwischen dem Akku und dem Akkufach eindringt, zu der Ablaufbohrung zu lenken.

11. Elektrowerkzeug (10) nach einem der Ansprüche 1 bis 7 oder 10, ferner umfassend ein Fluidverteilungssystem (200), das eine Sprühdüse (220) einschließt, die konfiguriert ist, um Fluid auf das Schneidrädchen (25) abzugeben.

12. Elektrowerkzeug (10) nach Anspruch 11, wobei das Fluidverteilungssystem (200) einen Verbinder (205) einschließt, der mit einem unteren Abschnitt des Gehäuses (15) gekoppelt ist, wobei der Verbinder für eine Befestigung an einer Fluidzuleitung zum Zuleiten von Fluid zu dem Fluidverteilungssystem konfiguriert ist.

13. Elektrowerkzeug (10) nach Anspruch 12, ferner umfassend einen Griff (225), der mit dem oberen Abschnitt des Gehäuses (15) gekoppelt ist, wobei das Fluidverteilungssystem ein Steuerventil (210) einschließt, das mit dem Griff gekoppelt ist.

14. Elektrowerkzeug (10) nach Anspruch 11, ferner umfassend eine Schutzvorrichtung (30), die konfiguriert ist, um das Schneidrädchen (25) mindestens teilweise zu umgeben,
und optional:
(a) wobei die Sprühdüse (220) eine erste Sprühdüse ist, wobei das Fluidverteilungssystem ferner eine zweite Sprühdüse einschließt, und wobei die erste Sprühdüse und die zweite Sprühdüse auf gegenüberliegenden Seiten der Schutzvorrichtung positioniert sind, oder
(b) wobei die Schutzvorrichtung zwischen einer Vielzahl von Winkelpositionen relativ zu dem Schneidrädchen einstellbar ist, wobei die Schutzvorrichtung einen Hilfsgriff (225) einschließt, der konfiguriert ist, um eine Einstellung der Schutzvorrichtung zu ermöglichen, wobei die Sprühdüse mit einer Zuleitung gekoppelt ist, die konfiguriert ist, um der Sprühdüse Fluid zuzuleiten, und wobei sich die Zuleitung durch den Hilfsgriff erstreckt.

15. Elektrowerkzeug nach einem der Ansprüche 1 bis 7 oder 10, ferner umfassend:
einen hinteren Griff (45), der sich von dem Gehäuse (15) erstreckt;
eine Apertur (305), die sich durch das Gehäuse zwischen dem hinteren Griff und dem Motor seitlich erstreckt;
eine Vielzahl von Lufteinlassöffnungen (310), die um einen Umfang der Apertur angeordnet sind, wobei die Lufteinlassöffnungen mit einem Inneren des Gehäuses in Austausch sind;
eine Wand (320), die den Motor von den Lufteinlassöffnungen derart trennt, dass ein Luftraum zwischen den Lufteinlassöffnungen und der Wand definiert ist;
eine Leiterplatte (70), die konfiguriert ist, um den Betrieb des Motors zu steuern, wobei die Wand konfiguriert ist, um einen Kühlluftstrom, der in die Lufteinlassöffnungen eintritt, zu der Leiterplatte zu lenken; und
eine Vielzahl von Luftauslassöffnungen (330), die in dem unteren Gehäuseabschnitt ausgebildet sind, wobei der Kühlluftstrom durch die Luftauslassöffnungen abführbar ist,
und wobei der Kühlluftstrom konfiguriert ist, um an dem Motor vorbeizuströmen, um den Motor zu kühlen, bevor er durch die Luftauslassöffnungen abgeführt wird.

## Revendications

1. Outil motorisé (10) comprenant :
un carter (15) ;
un moteur supporté à l'intérieur du carter, le moteur ayant un arbre de sortie pouvant fonctionner à une vitesse maximale supérieure à 10 000 tours par minute ;
une batterie (75) configurée pour alimenter le moteur, la batterie ayant une tension de sortie supérieure à 40 volts ;
un bras de support (20) s'étendant à partir du carter et définissant un axe longitudinal (400), le bras de support comportant une première partie de bras (145) accouplée au carter et une seconde partie de bras (150) accouplée à la première partie de bras ;
une poulie d'entraînement (105) accouplée à l'arbre de sortie, laquelle est accouplée de manière à pouvoir pivoter à la première partie de bras, la poulie d'entraînement définissant un premier axe (135) ;
une poulie entraînée (110) accouplée à la seconde partie de bras, la poulie entraînée définissant un second axe (140) espacé du premier axe ;
une courroie synchrone (115) reliant la poulie d'entraînement et la poulie entraînée ; et
une roue de coupe (25) accouplée à la poulie entraînée, la roue de coupe ayant un diamètre supérieur à 22,9 cm (9 pouces),
dans lequel la seconde partie de bras est mobile par rapport à la première partie de bras entre une première configuration et une seconde configuration décalée de 180 degrés par rapport à la première configuration autour de l'axe longitudinal, repositionnant ainsi la roue de coupe sur un autre côté du bras de support, et
dans lequel une distance entre le premier axe et le second axe est sensiblement la même à la fois dans la première configuration et dans la seconde configuration.

2. Outil motorisé (10) selon la revendication 1, dans lequel la première configuration définit une configuration intérieure dans laquelle la roue de coupe (25) est généralement alignée avec un plan médian longitudinal de l'outil motorisé, et dans lequel la seconde configuration définit une configuration extérieure dans laquelle la roue de coupe est décalée par rapport au plan médian longitudinal.

3. Outil motorisé (10) selon la revendication 2, dans lequel la première partie de bras (145) comporte un premier côté (405) et un second côté (410) opposé au premier côté, dans lequel la seconde partie de bras (150) comporte une bride (415) ayant un côté interne (420), dans lequel le côté interne vient en butée contre le premier côté de la première partie de bras dans la première configuration, et dans lequel le côté interne vient en butée contre le second côté de la première partie de bras dans la seconde configuration.

4. Outil motorisé (10) selon la revendication 3, dans lequel la première partie de bras (145) comporte une pluralité de broches de positionnement pouvant être reçues dans une pluralité correspondante d'ouvertures de positionnement dans la seconde partie de bras (150).

5. Outil motorisé (10) selon la revendication 4, dans lequel la pluralité d'ouvertures de positionnement comportent une première ouverture de positionnement qui est allongée dans une direction parallèle à l'axe longitudinal.

6. Outil motorisé (10) selon la revendication 1, dans lequel la poulie d'entraînement (105) et la poulie entraînée (110) sont conçues pour fournir un rapport de réduction de vitesse de la poulie d'entraînement à la poulie entraînée compris entre 3:1 et 5:1.

7. Outil motorisé (10) selon la revendication 1, dans lequel le fonctionnement de l'outil motorisé produit une pression acoustique inférieure à 85 décibels.

8. Outil motorisé (10) selon l'une quelconque revendication précédente, comprenant en outre une poignée (45, 55) conçue pour être saisie par un opérateur pendant le fonctionnement de l'outil motorisé, dans lequel l'outil motorisé est conçu pour produire une vibration main-bras au niveau de la poignée inférieure à 3,0 m/s² pendant le fonctionnement sans charge.

9. Outil motorisé (10) selon l'une quelconque des revendications 1 à 7, comprenant en outre une poignée (45, 55) conçue pour être saisie par un opérateur pendant le fonctionnement de l'outil motorisé, dans lequel l'outil motorisé est conçu pour produire une vibration main-bras au niveau de la poignée inférieure à 3,0 m/s² pendant le fonctionnement sans charge sur la roue de coupe, et dans lequel l'outil motorisé est conçu pour produire une vibration main-bras moyenne au niveau de la poignée comprise entre environ 5 m/s² et environ 7 m/s² pendant un fonctionnement de coupe en plongée.

10. Outil motorisé (10) selon la revendication 1, comprenant en outre un réceptacle de batterie (80) disposé sur la partie supérieure du carter (15), la batterie (75) étant accouplée de manière amovible au réceptacle, le réceptacle de batterie comportant
un rail de guidage (235) définissant un axe d'insertion et de retrait de la batterie,
une partie évidée (245) adjacente au rail de guidage, la partie évidée ayant une surface de drainage (250) formant un angle aigu inclus avec l'axe d'insertion et de retrait, et
un trou de drainage (265) situé à proximité d'une extrémité de la surface de drainage,
dans lequel la surface de drainage est conçue pour diriger du fluide qui s'infiltre dans une interface entre la batterie et le réceptacle de batterie vers le trou de drainage.

11. Outil motorisé (10) selon l'une quelconque des revendications 1 à 7 ou 10, comprenant en outre un système de distribution de fluide (200) comportant une buse de pulvérisation (220) conçue pour évacuer du fluide sur la roue de coupe (25).

12. Outil motorisé (10) selon la revendication 11, dans lequel le système de distribution de fluide (200) comporte un connecteur (205) accouplé à une partie inférieure du carter (15), le connecteur étant conçu pour la fixation à une conduite d'approvisionnement en fluide pour l'approvisionnement du système de distribution de fluide en fluide.

13. Outil motorisé (10) selon la revendication 12, comprenant en outre une poignée (225) accouplée à la partie supérieure du carter (15), dans lequel le système de distribution de fluide comporte une soupape de commande (210) accouplée à la poignée.

14. Outil motorisé (10) selon la revendication 11, comprenant en outre une protection (30) conçue pour entourer au moins partiellement la roue de coupe (25),
et éventuellement :
(a) dans lequel la buse de pulvérisation (220) est une première buse de pulvérisation, dans lequel le système de distribution de fluide comporte en outre une seconde buse de pulvérisation, et dans lequel la première buse de pulvérisation et la seconde buse de pulvérisation sont positionnées sur des côtés opposés de la protection, ou
(b) dans lequel la protection est réglable entre une pluralité de positions angulaires par rapport à la roue de coupe, dans lequel la protection comporte une poignée auxiliaire (225) conçue pour faciliter le réglage de la protection, dans lequel la buse de pulvérisation est accouplée à une conduite d'approvisionnement conçue pour approvisionner la buse de pulvérisation en fluide, et dans lequel la conduite d'approvisionnement s'étend à travers la poignée auxiliaire.

15. Outil motorisé selon l'une quelconque des revendications 1 à 7 ou 10, comprenant en outre :
une poignée arrière (45) s'étendant à partir du carter (15) ;
une ouverture (305) s'étendant latéralement à travers le carter entre la poignée arrière et le moteur ;
une pluralité d'ouvertures d'admission d'air (310) disposées autour d'une périphérie de l'ouverture, les ouvertures d'admission d'air étant en communication avec un intérieur du carter ;
une paroi (320) séparant le moteur des ouvertures d'admission d'air de telle sorte qu'un espace d'air est défini entre les ouvertures d'admission d'air et la paroi ;
une carte de circuit imprimé (70) configurée pour commander le fonctionnement du moteur, dans lequel la paroi est configurée pour diriger un flux d'air de refroidissement qui entre par les ouvertures d'admission d'air vers la carte de circuit imprimé ; et
une pluralité d'ouvertures d'évacuation d'air (330) formées dans la partie de carter inférieure, dans lequel le flux d'air de refroidissement peut être évacué à travers les ouvertures de sortie d'air,
et dans lequel le flux d'air de refroidissement est conçu pour s'écouler au-delà du moteur pour refroidir le moteur avant d'être évacué à travers les ouvertures de sortie d'air.
